# EUROPEAN PATENT SPECIFICATION

(11) **EP 3 431 454 B1**
(45) Date of publication and mention of the grant of the patent: **26.01.2022**
(21) Application number: 17766584.1
(22) Date of filing: 13.03.2017
(51) Int. Cl.: C03C 17/245, B32B 18/00, C03C 17/34, C04B 35/505

(54) **LIGHT-TRANSMITTING MATERIAL, LOW-ADHESION MATERIAL AND MOLDING MEMBER**
LICHTDURCHLÄSSIGES MATERIAL, MATERIAL MIT GERINGER HAFTUNG UND FORMELEMENT
MATÉRIAU DE TRANSMISSION DE LUMIÈRE, MATÉRIAU À FAIBLE ADHÉRENCE ET ÉLÉMENT DE MOULAGE

(30) Priority: 16.03.2016 JP 2016052024
(43) Date of publication of application: 23.01.2019
(73) Proprietor: Towa Corporation, Kyoto-shi, Kyoto 601-8105 (JP)
(72) Inventor: FUJIWARA, Kunihiko, Kyoto-shi Kyoto 601-8105 (JP); HIGASHI, Daisuke, Kyoto-shi Kyoto 601-8105 (JP); KISHIMOTO, Tomoko, Kyoto-shi Kyoto 601-8105 (JP)
(74) Representative: Ter Meer Steinmeister & Partner
(86) International application number: PCT/JP2017/009868
(87) International publication number: WO 2017/159584

(56) References cited:
- JP-A- 2011 079 261
- JP-A- 2014 522 433
- JP-A- 2015 214 070
- JP-A- 2015 214 070

## Description

### [TECHNICAL FIELD]

This invention relates to a translucent material provided with a base and an oxide layer, a low-adhesion material, and a molding member. As used herein, terms, "translucent" and "translucency", refer to the property of a material that allows light to transmit therethrough (for reference: JIS R 1600). In the documents filed with this application, the context of "being translucent" or having "translucency" encompasses being "transparent" and "transparency".

### [BACKGROUND ART]

The patent literature 1 describes a molding die including a metallic medium, and a ceramic layer formed on the medium. The ceramic layer makes contact with a molded article formed in the die, and includes yttrium oxide, nitrogen, and Group 4A cation (paragraph [0006] of the patent literature 1). It is further described in this patent literature that the ceramic layer including yttrium oxide and formed on the die surface may improve the anti-fouling capacity and mold releasability of the molding die (paragraph [0039] of the patent literature 1), and such an attempt to improve the anti-fouling capacity and mold releasability may be directed to a material, resin, used in the process of producing molded articles (paragraph [0056] of the patent literature 1).

### [CITATIONS LIST]

### [PATENT LITERATURE]

[PATENT LITERATURE 1] Japanese Unexamined Patent Publication No. 2015-214070

### [SUMMARY OF THE INVENTION]

### [TECHNICAL SOLUTIONS]

The molding die described in the patent literature 1 is constructed of the metallic medium and the ceramic layer formed on the metal medium. Due to this structure, there are issues with the molding die described in this patent literature, which are difficulty in weight reduction of the molding die, and inaptitude of the materials of this die for any applications that demand translucency.

This invention was accomplished to address these issues, and provides a low-adhesion material and a molding member that may fulfill weight reduction of a molding die and also fulfil desirably low adherability for and a high anti-fouling effect against a diverse range of materials including resin used in the process of producing molded articles. This invention further provides a translucent material that may be suitably used in the low-adhesion material and the molding member.

### [TECHNICAL SOLUTION]

This invention provides a translucent material including:
a base made of a glass-based material (glass-based substance); and
an oxide layer layered on a surface of the base.

In the translucent material according to this invention, the oxide layer includes yttrium oxide (Al₂O₃) as a base material thereof and further includes nitrogen and a Group 4A element, and wherein the oxide layer has low adherability for at least one of animal oil, vegetable oil, and mineral oil.

In the translucent material according to an aspect of this invention, the glass-based material may include heat-resistant glass.

In the translucent material according to another aspect of this invention, the glass-based material may include tempered glass.

In the translucent material according to yet another aspect of this invention, the oxide layer may be directly adhered to the base.

In the translucent material according to yet another aspect of this invention, the glass-based material may include quartz glass.

According to yet another aspect of this invention, the translucent material may further include an intermediate layer interposed between the oxide layer and the base.

This invention further provides a low-adhesion material having low adherability for a material used, the low-adhesion material including:
a base made of an inorganic material; and
an oxide layer layered on a surface of the base.

In the low-adhesion material according to this invention, the oxide layer includes yttrium oxide as a base material thereof and further includes nitrogen and a Group 4A element, and the oxide layer makes contact with the material used.

In the low-adhesion material according to an aspect of this invention, the oxide layer may be directly adhered to the base.

According to another aspect of this invention, the low-adhesion material may further include an intermediate layer interposed between the oxide layer and the base.

In the low-adhesion material according to yet another aspect of this invention, the material used may include at least one of thermosetting resin, animal oil, vegetable oil, and mineral oil.

This invention further provides a molding member that makes contact with a material used in the process of producing a molded article, the molding member including:
a base made of an inorganic material; and
an oxide layer layered on a surface of the base.

In the molding member according to this invention, the oxide layer includes yttrium oxide as a base material thereof and further includes nitrogen and a Group 4A element.

In the molding member according an aspect of this invention, the oxide layer may be directly adhered to the base.

The molding member according another aspect of this invention may further include an intermediate layer interposed between the oxide layer and the base.

In the low-adhesion material according to yet another aspect of this invention, the material used may include at least one of thermosetting resin, animal oil, vegetable oil, and mineral oil

### [EFFECTS OF THE INVENTION]

This invention provides a low-adhesion material and a molding member that may fulfill weight reduction of a molding die and also fulfil desirably low adherability for and a high anti-fouling effect against a diverse range of materials including resin used in the process of producing molded articles. This invention further provides a translucent material that may be suitably used in the low-adhesion material and the molding member.

### [BRIEF DESCRIPTION OF THE DRAWINGS]

Fig. 1A is a cross-sectional view of a translucent material, a low-adhesion material, and a molding member according to examples of this invention.
Fig. 1B is a cross-sectional view of a translucent material, a low-adhesion material, and a molding member according to a modified example of this invention.
Fig. 2 is a graphic chart of an adherability evaluation result between different pieces of glass and an oxide layer in a translucent material according to an example of this invention.
Fig. 3A is a graphic chart of a first surface hardness measurement result of an oxide layer in a translucent material according to an example of this invention when the oxide layer is formed on heat-resistant glass.
Fig. 3B is a graphic chart of a second surface hardness measurement result of an oxide layer in a translucent material according to an example of this invention when the oxide layer is formed on tempered glass.
Fig. 4 is a graphic chart of light transmittance variability with different thicknesses of an oxide layer in a translucent material according to an example of this invention.
Fig. 5 is a graphic chart of three-point bending strengths of an unprocessed product and a product having both surfaces coated with oxide layers representing a translucent material according to an example of this invention.
Fig. 6 is a graphic chart of adhesive strength measurement result of a composite material having a surface coated with an oxide layer included in the scope of this invention and a material having a hard chromium-plated surface according to a comparative example.
Fig. 7 shows a photograph of a bottom surface on the inner side of a cavity in a molding member subsequent to a predetermined number of molding operations using a composite material having a surface coated with an oxide layer included in the scope of this invention.
Fig. 8 is a photograph of a bottom surface on the inner side of a cavity in a molding member subsequent to a predetermined number of molding operations using a molding member according to a comparative example.
Fig. 9A shows photographs of how surfaces to be evaluated of samples are rubbed with a piece of wiping paper.
Fig. 9B is a drawing of surfaces to be evaluated of samples to be rubbed with a piece of wiping paper.
Fig. 9C shows a photograph of a step of heating a sample coated with oil prepared for evaluation.
Fig. 10A shows photographs of fingerprint-imprinted surfaces of two samples before these surfaces are wiped.
Fig. 10B shows photographs of fingerprint-imprinted surfaces of two samples after these surfaces are wiped.
Fig. 11A shows photographs of heated and then cooled animal oil-adhered surfaces of two samples before these surfaces are wiped.
Fig. 11B shows photographs of heated and then cooled animal oil-adhered surfaces of two samples after these surfaces are wiped.
Fig. 12A shows photographs of heated and then cooled vegetable oil-adhered surfaces of two samples before these surfaces are wiped.
Fig. 12B shows photographs of heated and then cooled vegetable oil-adhered surfaces of two samples after these surfaces are wiped.
Fig. 13A shows photographs of heated and then cooled mineral oil-adhered surfaces of two samples before these surfaces are wiped.
Fig. 13B shows photographs of heated and then cooled mineral oil-adhered surfaces of two samples after these surfaces are wiped.

### [EMBODIMENTS OF THE INVENTION]

Embodiments of this invention are hereinafter described. Any similar or identical structural elements described herein may be simply indicated with the same reference signs, without redundant description of such elements.

The number and/or quantity hereinafter described in the embodiments should not be construed as limiting the scope of this invention unless otherwise specified. In the embodiments hereinafter described, the structural elements are not necessarily indispensable unless otherwise specified.

As used herein, the terms, "low adhesion" and "low adherability", refer to two types of properties; one of which means "property that can prevent any dirt or smear attributable to an object (for example, molded article) from adhering to the surface of a member made of a material (for example, molding member) when the member makes contact with the object and the other of which means "property that allows any dirt or smear adhered to the surface of a member to be easily detached (removed) from the surface. Therefore, any material having low adherability for an object may have an anti-fouling capacity against the object. In other words, a material (substance) having low adherability may be defined as an anti-fouling material.

### [WORKING EXAMPLE 1]

### - Translucent material of working example 1

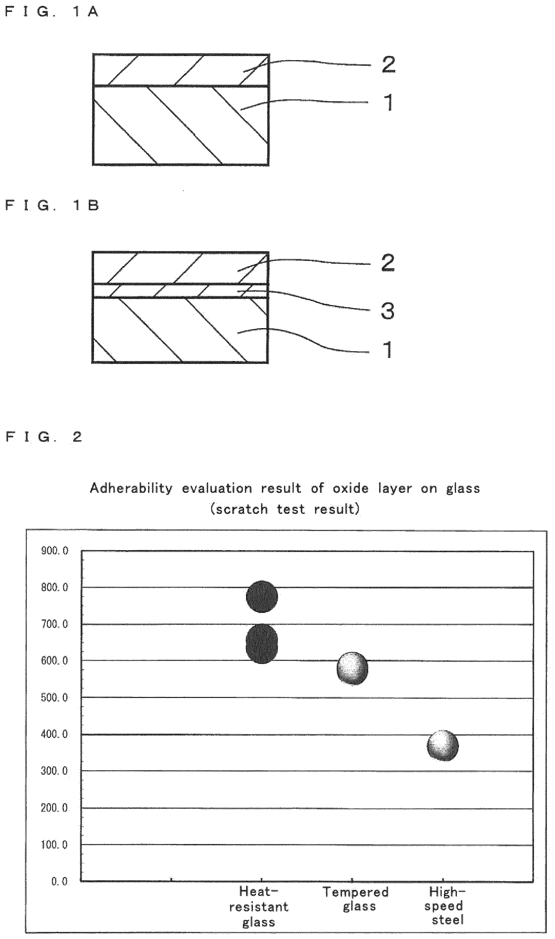

Hereinafter, translucent materials according to a working example 1 of this invention and a modified example derived from the working example 1 are described referring to Figs. 1A and 1B. The translucent material according to the working example 1 has a base 1 made of a glass-based material (glass-based substance) and an oxide layer 2 including a ceramic layer formed in an upper direction (or on an upper surface) of the base 1. Thus, the translucent material according to the working example 1 is a composite material.

Examples of the glass-based material constituting the base 1 may include soda lime glass, aluminosilicate glass, borosilicate glass, and quartz glass. When quartz glass is selected and used, an intermediate layer may be preferably interposed between the base 1 and the oxide layer 2 (which will be described later).

The exemplified glass-based materials constituting the base 1 may be divided into the following groups of materials; tempered glass using soda lime glass or aluminosilicate glass, heat-resistant glass mostly using borosilicate glass such as TEMPAX Float^{®} (registered trademark), and quartz glass. The tempered glass may be obtained by tempering and quenching soda lime glass with air, or by subjecting ion aluminosilicate glass to an ion-exchange treatment using, for example, an aqueous solution or a potassium salt solution containing potassium ions.

The oxide layer 2 includes yttrium oxide (Y₂O₃) as a base material thereof and further includes nitrogen and a Group 4A element. Such materials constituting the oxide layer 2 may be referred to as "material primarily consisting of Y₂O₃".

As illustrated in Fig. 1A, the base 1 made of a glass-based material and the oxide layer 2 are directly adhered to each other. Such direct adhesion between the base 1 and the oxide 2 may be feasible when an adequately small difference lies between coefficients of thermal expansion of the oxide layer 2 and of the glass-based material constituting the base 1.

The coefficient of thermal expansion α of the heat-resistant glass may be approximately 3.3×10⁻⁶. In the oxide layer 2 including yttrium oxide as its base material, the coefficient of thermal expansion a may be 6.5×10⁻⁶. With such a relatively small difference between the coefficients of thermal expansion α of the oxide layer 2 and of the glass-based material constituting the base 1, the base 1 and the oxide layer 2 may be directly adhered to each other.

A manufacturing method for the translucent material illustrated in Fig. 1A is hereinafter described. To start with, the glass-based material constituting the base 1 is prepared. In case the base 1 is required to have a three-dimensional shape, for example, a shape with an uneven surface, the glass-based material may be three-dimensionally shaped beforehand by cutting and/or etching.

Next, the oxide layer 2 is formed on the upper surface of the base 1. An exemplified technique to form the oxide layer 2 on the upper surface of the base 1 may be physical vapor deposition (PVD). Examples of the PVD may include vacuum deposition, electron beam deposition, sputtering, plasma spraying, plasma ion implantation, plasma ion implantation, and ion plating. Other examples of the technique may include chemical vapor deposition and sol-gel process.

A translucent material according to a modified example derived from the working example 1 is hereinafter described referring to Fig. 1B. Fig. 1B is a drawing of the translucent material according to the modified example, including a base 1, an oxide layer 2, and an intermediate layer 3 interposed between the base 1 and the oxide layer 2. In this translucent material according to the modified example, the base 1 is made of a glass-based material, the layered intermediate layer 3 is adhered to the upper surface of the base 1, and the layered oxide layer 2, is adhered to the upper surface of the intermediate layer 3.

The base 1 is made of quartz glass. The coefficient of thermal expansion α1 of quartz glass may be approximately 0.55×10⁻⁶. The coefficient of thermal expansion a2 of the oxide layer 2 may be approximately 6.5×10⁻⁶. When such a large difference lies between the coefficient of thermal expansion α1 of the glass-based material constituting the base 1 and the coefficient of thermal expansion a2 of the oxide layer 2, the intermediate layer 3 may desirably be formed between the base 1 and the oxide layer 2, which may alleviate thermal shrinkage. Suitable examples of the material of the intermediate layer 3 may include glass-based materials having a coefficient of thermal expansion α3 substantially equal to a median value between the coefficient of thermal expansion α1 of the base 1 and the coefficient of thermal expansion a2 of the oxide layer 2. Other examples of the material of the intermediate layer 3 may include translucent ceramic materials having the coefficient of thermal expansion a3.

### - First evaluation of translucent material: adherability

An adherability (adhesive strength) evaluation result of the translucent material according to the working example 1 is hereinafter described referring to Fig. 2. In Fig. 2, high-speed steel on the right-end side used in a comparative example is a steel-based material often used in metal molds and tools. The adherability of a layer primarily consisting of Y₂O₃ (may be hereinafter referred to as "oxide layer included in the scope of this invention" or simply "oxide layer") to a respective one of glass-based materials shown in this drawing is compared with the adherability of the oxide layer to the steel-based material. The high-speed steel is coated with an oxide layer formed in the thickness of 3.0 µm, tempered glass is coated with an oxide layer formed in the thickness of 0.1 pm, and heat-resistant glass is coated with an oxide layer formed in the thickness of 0.1 µm.

As illustrated in Fig. 2, the adherability of the oxide layer to tempered glass is approximately 1.57 times greater than the adherability of the oxide layer to the steel-based material, and the adherability of the oxide layer to heat-resistant glass is approximately 1.88 times greater than the adherability of the oxide layer to the steel-based material. This result teaches that the adherability of the oxide layer to the glass-based materials is relatively greater than the adherability of the oxide layer to the steel-based material.

A scratch test was performed to evaluate the adherability, in which the following actions were simultaneously taken; a first step of pushing a stylus against an object placed on an X-Y plane, a second step of increasing over time a load applied to the object from the stylus tip, a third step of oscillating the stylus in Y direction, and a fourth step of moving the stylus in X direction. To summarize these actions in sentence, the stylus being oscillated in Y direction is moved in X direction, with the load applied to the stylus being gradually increased, so as have the stylus tip scratch the object. Then, the load applied to the stylus when the oxide layer is peeled off is defined as a critical load value. A greater critical load value indicates a greater adhesive strength,

**Conditions for scratch test**

| Tester used: | Nano-layer scratch tester CSR-2000, | | |
|---|---|---|---|
| | | RHESCA CO., LTD. | |
| Rate of oscillation: | | | 100 µm |
| Time of measurement: | | | 120 s |
| Load when measurement ends: | | | 600 mN |
| Sampling cycle: | | | 3600 Hz |
| Spring constant: | | | 100 gf/mm (0.98 N/mm) |
| Stylus radius: | | | 15 µm |

### - Second evaluation of translucent material: surface hardness

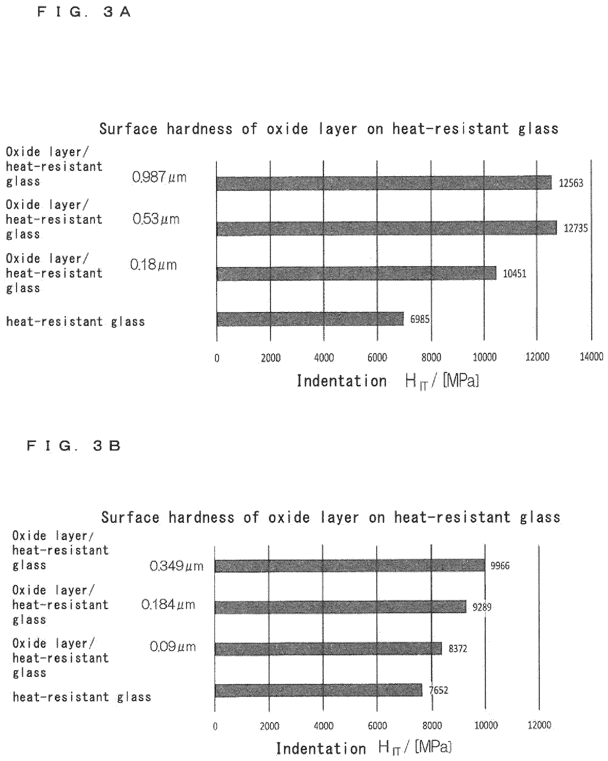

Referring to Figs. 3A and 3B, the surface hardness of the translucent material according to the working example 1 is hereinafter described. Fig. 3A is a drawing illustrating degrees of surface hardness of oxide layers formed in different thicknesses on heat-resistant glass (base). The oxide layer of 0.18 µm in thickness resulted in surface hardness 1.50 times greater than the surface hardness of heat-resistant glass per se. The oxide layer of 0.53 µm in thickness resulted in surface hardness 1.82 times greater than the surface hardness of heat-resistant glass per se. The oxide layer of 0.987 µm in thickness resulted in surface hardness 1.80 times greater than the surface hardness of heat-resistant glass per se. This teaches that the oxide layers formed on heat-resistant glass resulted in markedly improved surface hardness in contrast to the surface hardness of heat-resistant glass per se.

Fig. 3B is a drawing illustrating degrees of surface hardness of oxide layers formed in different thicknesses on tempered glass (base). The oxide layer of 0.09 µm in thickness resulted in surface hardness 1.09 times greater than the surface hardness of tempered glass per se. The oxide layer of 0.184 µm in thickness resulted in surface hardness 1.21 times greater than the surface hardness of tempered glass per se. The oxide layer of 0.349 µm in thickness resulted in surface hardness 1.30 times greater than the surface hardness of tempered glass per se. This teaches that the oxide layers formed on tempered glass resulted in improved surface hardness in contrast to the surface hardness of tempered glass per se.

Conditions for measurement of surface hardness are laid out below. As a result of nanoindentation from the layer surface, a load displacement curve was obtained and used to calculate the Young's modulus of elasticity and hardness. An indenter tip was corrected by the Tanaka method. For unloading fitting, upper 70% to 90% was subjected to straight-line approximation to produce the tangent line.

| | | | |
|---|---|---|---|
| 1) Measuring apparatus: | | | Nanoindentation tester NT-1100a, ELIONIX INC. |
| 2) Indenter: | Triangular indenter, Berkovich | | |
| 3) Indentation load: | | 5 mN | |

### - Third evaluation of translucent material: light transmittance

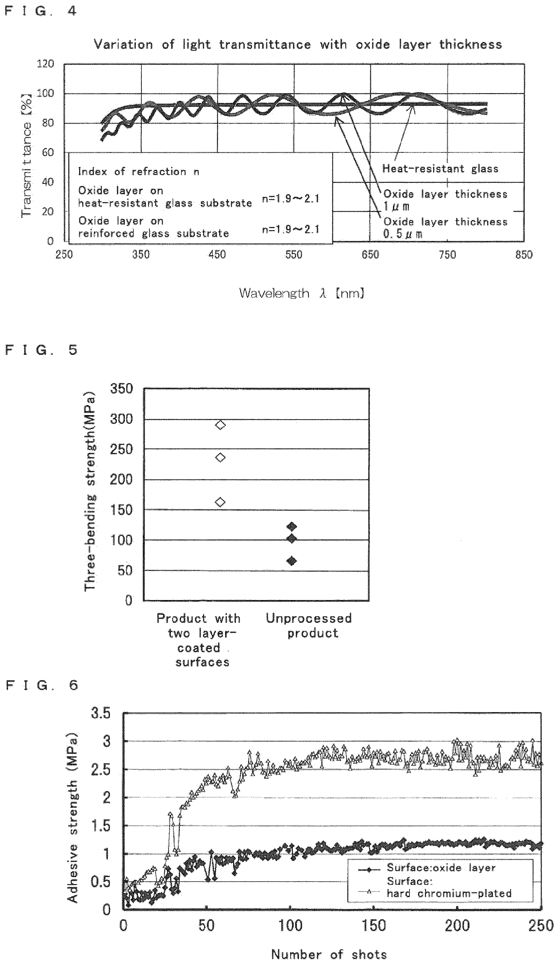

Referring to Fig. 4, light transmittance of the translucent material according to the working example 1 is hereinafter described. The following three translucent materials were prepared and used.
1) Heat-resistant glass (thickness: 1.1 mm)
2) Sample S1 Composite material including heat-resistant glass of 1.1 mm in thickness and an oxide layer of 1 µm in thickness formed on the glass
3) Sample S2 Composite material including tempered glass of 0.7 mm in thickness and an oxide layer of 0.5 µm in thickness formed on the glass

Fig. 4 shows ratios of transmittance of light having a wavelength between 300 nm and 800 nm in the three materials; heat-resistance glass, sample S1, and sample S2. The light having a wavelength between 300 nm and 800 nm includes most of visible light range and part of near ultraviolet range. The result of Fig. 4 teaches two facts; ratios of transmittance of near ultraviolet light in the samples S1 and S2 are slightly less than the ratio of transmittance of near ultraviolet light in heat-resistant glass, and ratios of transmittance of most of visible light in the samples S1 and S2 are substantially equal to the ratio of transmittance of most of visible light in heat-resistant glass. Therefore, the samples S1 and S2 may be both usable in any applications that require transmission of visible light.

**Conditions for measuring light transmittance**

| | |
|---|---|
| Measuring apparatus: | Spectrophotometer for ultraviolet, visible light, and near infrared |
| Solid Spec-3700/3700 DUV, | Shimadzu Corporation |
| Wavelength range: | 175 - 2600 nm (wavelength range actually measured: 300 - 800 nm) |

### - Fourth evaluation of translucent material: bending strength

The result of a three-point bending strength test for the translucent material according to the working example 1 is hereinafter described referring to Fig. 5. The following two translucent materials were prepared and used.
1) Heat-resistant glass (75×25×1.1 mm, unprocessed product)
2) Sample S3 Composite material including an item equivalent to the heat-resistant glass of 1) and oxide layers of 1.3 µm in thickness formed on both surfaces of the item

A bending strength test similar to the bending strength test (three-point bending strength test) for fine ceramics, JIS R 1601 (conditions were partly changed), was performed for the heat-resistant glass (unprocessed product) of 1) and the sample S3. As is known from Fig. 5, the average bending strength value of the sample S3 was approximately 2.3 times greater than that of the heat-resistant glass.

This strongly indicates that the composite material having oxide layers formed on the heat-resistant glass can attain an improved bending strength in comparison with the bending strength of the heat-resistant glass per se.

Conditions for the bending strength test are laid out below. Any other relevant terms were the same as in the bending strength test for fine ceramics, JIS R 1601.
1) Crosshead speed: 10 mm/s
2) R1 of tip of supporting tool: 0.3 mm

### - Fifth evaluation of translucent material: wear resistance

A reciprocating friction and wear test was performed for the translucent material according to the working example 1, the result of which is hereinafter described. The following two types of translucent materials were prepared and used as samples.
1) Heat-resistant glass (75×25×1.1 mm in thickness)
2) Sample S4 Composite material including an item equivalent to the heat-resistant glass of 1) and oxide layers of 0.1 µm in thickness formed on both surfaces of the item

The coefficient of dynamic friction was measured, and the friction and wear test was performed for the heat-resistant glass of 1) and the sample S4, as a result of which the following values were obtained. The coefficients of dynamic friction of the heat-resistant glass and the sample S4 were respectively 0.26 and 0.24. The heat-resistant glass started to wear after the friction and wear test was performed approximately 150 times, whereas no wear was detected in the sample S4 until the friction and wear test was performed more than approximately 1,000 times. This result shows that the coefficient of dynamic friction is substantially equal between the heat-resistant glass and the composite material further including the oxide layers of 0.1 µm in thickness on the heat-resistant glass, and wear resistance is markedly improved in the composite material further including the oxide layers of 0.1 µm in thickness on the heat-resistant glass, as compared with the heat-resistant glass per se.

**Conditions for friction and wear test**

| | | | | |
|---|---|---|---|---|
| | Measuring apparatus: | Friction and wear tester | | |
| | | HEIDON TRIBOGEAR 14FW, | | |
| | | Shinto Scientific Co., Ltd. | | |
| | Type of opposite material: | Alumina sphere | | |
| | Diameter of opposite material: | | ϕ 5 mm | |
| | Contact load of opposite material: | | | 20 gf |
| | Sliding distance: | 5 mm (reciprocating distance: 10 mm) | | |
| | Sliding speed: | 10 mm/s | | |
| Number of sliding motions: | | 1000 times (whole length of 10 m), or until the layers are stripped off | | |

### - Low adherability of oxide layer

The low adherability of the oxide layer 2 including the material primarily consisting of Y₂O₃ (see Figs. 1A and 1B) is described referring to a result obtained with a sample in which the base 1 is made of a metallic material, instead of the sample in which the base 1 is made of an inorganic material including a glass-based material. In the oxide layer 2 including the material primarily consisting of Y₂O₃, the low adherability and the anti-fouling effect are solely exerted by the oxide layer 2 per se. The low adherability and anti-fouling effect of the oxide layer 2 are, therefore, described regardless of what type of material is used for the base 1, which will be consistently applied to what is hereinafter described.

Improvement of the low adherability of the oxide layer including the material primarily consisting of Y₂O₃ is hereinafter described referring to Fig. 6. Fig. 6 shows molding results obtained with a molding die having a surface coated with the oxide layer included in the scope of this invention and a molding die according to a comparative example (hard chromium-plated metallic medium). Specifically, the molding die having a surface coated with the oxide layer including the material primarily consisting of Y₂O₃, and the molding die of the comparative example were used in a predetermined number of resin molding operations, and adherability (mold releasability) between a respective one of the molding dies and cured resin was measured subsequent to each resin molding operation, so as to test and evaluate whether low adherability is fulfilled. The result of this test and evaluation is graphically illustrated in Fig. 6. The material used in this test and other tests described later was thermosetting resin (specifically, epoxy resin).

The result of Fig. 6 shows that the molding die having a surface coated with the oxide layer including the material primarily consisting of Y₂O₃ has a lower degree of adherability to the material used than the molding die of the comparative example. Specifically, the adherability of the molding die according to this invention to the material used is approximately 0.43 times greater than that of the molding die of the comparative example when 250 molding shots are completed (250 times). In this instance, the adherability to the thermosetting resin is sufficiently low in the translucent material having a surface coated with the oxide layer 2 illustrated in Figs. 1A and 1B.

### - Anti-fouling effect of oxide layer - 1

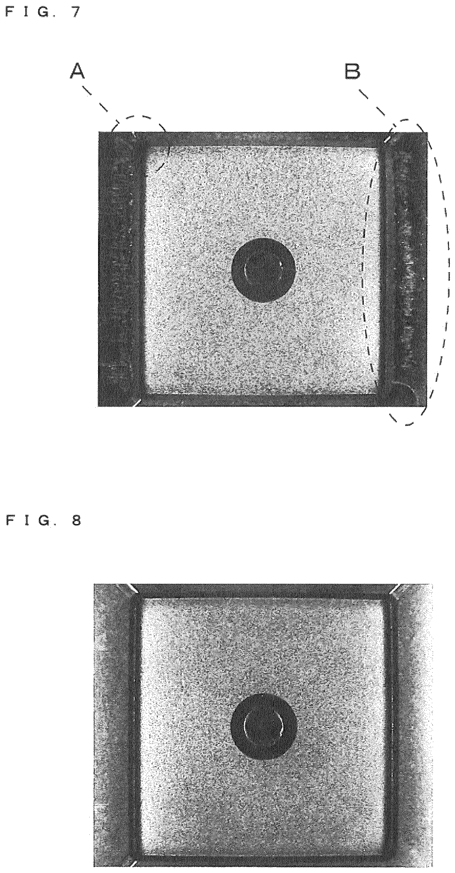

Hereinafter, improvement of the anti-fouling property according to the working example of this invention is described referring to Figs. 7 and 8. Fig. 7 shows a photograph of the bottom surface of the molding die having a surface coated with the oxide layer included in the scope of this invention after 1000 molding shots are completed with this molding die. Fig. 8 shows a photograph of the bottom surface of the molding die of the comparative example illustrated in Fig. 6 after 300 molding shots are completed with this molding die.

Referring to Figs. 7 and 8, no noticeable dirt or smear is detected in the molding die having a surface coated with the oxide layer included in the scope of this invention (Fig. 7) even after 1000 molding operations, whereas adhesion of resin to Part A, flash buildup in Part B, and discoloration of the whole bottom surface of the cavity were detected in the molding die of the comparative example (Fig. 8) after 300 molding shots. These results demonstrate that the translucent material having a surface coated with the oxide layer included in the scope of this invention exerts an outstanding anti-fouling effect against the thermosetting resin.

### - Evaluation of anti-fouling effect of oxide layer

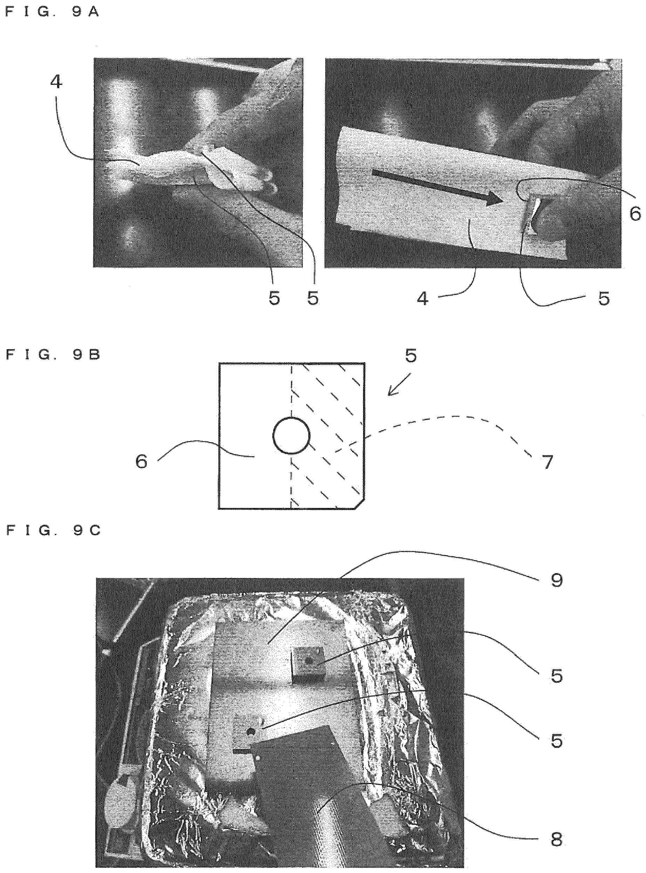

Referring to Figs. 9A to 13B, improvement of the anti-fouling effect in the working example of this invention is hereinafter described. The following four different oils; animal oil, vegetable oil, and mineral oil, were prepared and used for evaluation.

| | |
|---|---|
| a) Oil A for evaluation: | Animal oil, human-derived fat and oil (for evaluation of fingerprints on samples) |
| b) Oil B for evaluation: | Animal oil, beef tallow of domestic cattle |
| c) Oil C for evaluation: | Canola oil |
| d) Oil D for evaluation: | Mineral oil, lubricating oil for industrial use (SHELL TONNA (registered trademark) S3 M 68) |

### - Evaluation of anti-fouling effect of oxide layer - 1

The following two different samples were prepared, which were respectively a glass plate made of heat-resistant glass, and a glass plate made of heat-resistant glass of the same type and having a surface coated with an oxide layer.
1) Sample S5: Heat-resistant glass (comparative example)
2) Sample S6: Composite material including heat-resistant glass and an oxide layer formed on a surface of the glass.

The following evaluation test was performed, in which the oil A for evaluation (human-derived fat and oil) was used. First, fingers of a hand were pushed against the surfaces of the samples S5 and S6 so that the oil A for evaluation is adhered to the surfaces of the samples S5 and S6. Next, the surfaces of the respective samples were pushed and rubbed against a piece of wiping paper, a product called Kimwipes (registered trademark), and how much of the fingerprints are still left on the sample surfaces was observed. The fingerprints were imprinted on the sample surfaces to which the human-derived fat and oil had been transferred. The steps described so far were performed at room temperature. As used herein, "room temperature" refers to "ambient temperature between 15°C and 35°C" (see JIS K 6900).

The sample surfaces were wiped with an attempt to remove the oils for evaluation adhered thereto, as described below. As illustrated in Fig. 9A, two sheets of wiping paper each folded into four quarters were stacked on each other to form a piece of wiping paper 4. Then, surfaces to be evaluated and compared of two samples 5 were put together with the wiping paper 4 being interposed therebetween (see the left-side photograph of Fig. 9A). Then, the wiping paper 4 was pulled off, with fingers being gently pushed against surfaces of the samples 5 opposite to the surfaces to be evaluated 6. A thick arrow illustrated on the right-side photograph of Fig. 9A indicates a direction of movement of the samples 5 relative to the wiping paper 4.

As a result of the steps described above, the surfaces to be evaluated 6 of the two samples 5 were rubbed against the wiping paper 4 at the same time. Specifically, the surfaces to be evaluated 6 with the deposit adhered thereto were wiped with the wiping paper 4 so as to remove the deposit in accordance with different degrees of adhesion between the surfaces to be evaluated 6 and the adhered deposit. This operation was repeatedly performed at room temperature five times for the two samples 5 to be compared.

Below is described a result obtained with the evaluation test including an attempt to wipe off the oil A for evaluation (animal oil: human-derived fat and oil).
a) Use of oil A for evaluation (animal oil: human-derived fat and oil)

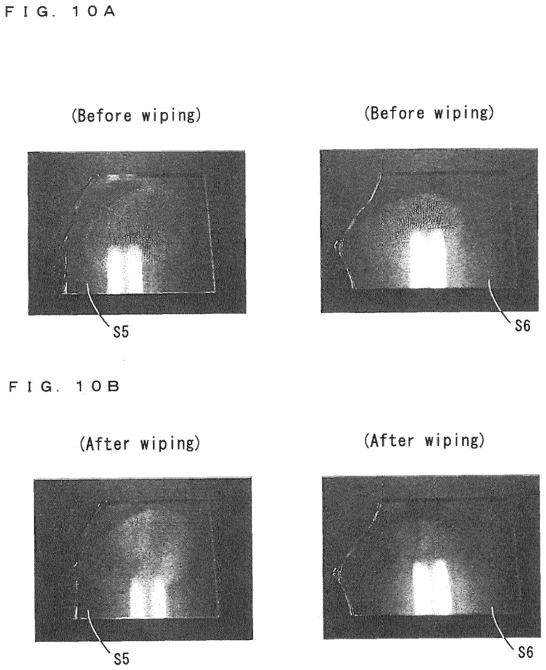

It is clearly known from the comparison between Figs. 10A and 10B that, in consequence of an attempt to wipe off the fingerprints, the fingerprints were more thoroughly removed from the wiped surface of the sample S6 than the wiped surface of the sample S5. This demonstrates that the sample S6 surpasses the sample S5 in terms of the anti-fouling effect against human-derived fat and oil (animal oil) at room temperature.

### - Evaluation of anti-fouling effect of oxide layer - 2

The following two composite materials were prepared, which were two plate-shaped, steel-based materials respectively having layers formed on their surfaces in the wake of different surface treatments.
1) Sample S7: Composite material including a steel plate and an HCr-plated layer formed on a surface of the steel plate
2) Sample S8: Composite material including a steel plate and an oxide layer formed on a surface of the steel plate

The evaluation test performed for the anti-fouling effect according to the working example of this invention is hereinafter described referring to Figs. 9A, 9B, and 9C. This test evaluated the anti-fouling effects of the two samples S7 and S8 against the oils B to D for evaluation, in which a sequence of steps described below were performed at room temperature.
1) Large surfaces to be evaluated 6 of the samples S7 and S8 (see Figs. 9A and 9B) were washed with acetone.
2) A half region of the surface to be evaluated 6 of the sample S7, S8 (hereinafter, referred to as "coating region 7") was coated with the oil B, C, D with use of a coating tool 8 including a thin glass epoxy substrate, and the applied oil was spread with the coating tool 8 (see Figs. 9B and 9C).
3) The samples S7 and S8 were heated on a hot plate 9 until their temperatures reached 180°C and were left at the temperature for three minutes (see Fig. 9C).
4) The heated samples S7 and S8 were left at rest at room temperature and cooled until the sample temperatures dropped to room temperature.
5) The coating regions 7 of the samples S7 and S8 coated with the oils for evaluation were observed from the aspect whether or to what extent the surface layers; HCr-plated layer and oxide layer, could repel the oils applied to these layers. This aspect and the following aspect are substantially alike, though they are described with different words; whether or to what extent the surface layers in the coating regions 7 of the sample S7 (comparative example) and the sample S8 can be wetted with the oils for evaluation.
6) Subsequent to the observation of 5), the surfaces of the sample S7 (comparative example) and of the sample S8 were rubbed against the wiping paper at the same time, specifically, the surfaces of these samples were wiped at the same time for removal of the oils for evaluation adhered to the coating regions 7 of the samples S7 and S8. Then, any residue of the oils in the coating regions 7 of the samples S7 and S8 was observed and determined.

The results obtained from the evaluation test including the steps 1) to 6) are described below.
b) Oil B for evaluation: animal oil, beef tallow of domestic cattle (Japan)
i) Surface layers: oil repellency

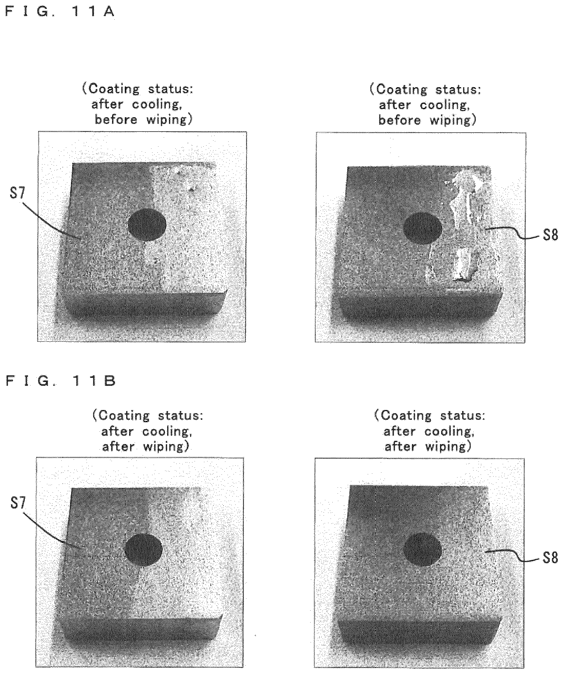

The sample S7 (comparative example) and the sample S8 after cooling were compared with each other to determine whether the oil B for evaluation (beef tallow) or how much of the oil B was left on the surfaces of these samples, as illustrated in Fig. 11A. The melting point of beef tallow is between 40°C and 56°C, which are higher than room temperature ("Science taste, 'fat & oil'", "online", "search on March 12, 2016", NISSUI CORPORATION, Internet URL: http://www.nissui.co.jp/academy/taste/15/>). Thus, beef tallow is in solid state at room temperature.

When the samples S7 and S8 were heated on a hot plate until their temperatures reached 180°C, the beef tallow was melted into fluid state. Fig. 11A may be considered to show the beef tallow which was melted and repelled (or not repelled) by the surfaces and then immediately cooled into solid state. Therefore, how much of the melted beef tallow is repelled by the surfaces may be known by comparing the surfaces of the sample S8 and of the sample S7 (comparative example) illustrated in Fig. 11A.

The result of comparison between the surfaces of the sample S8 and of the sample S7 (comparative example) illustrated in Fig. 11A shows the following facts; the melted beef tallow was not repelled at all by the surface of the sample S7 (comparative example), and the melted beef tallow was considerably repelled by the surface of the sample S8. These facts demonstrate that the oxide layer has markedly higher repellency against the melted beef tallow than the HCr-plated layer. Thus, the oxide layer exerts a markedly higher anti-fouling effect against the melted beef tallow (animal oil) than the HCr-plated layer. The surface of the oxide layer may be cleaned by simply wiping off the melted beef tallow (animal oil).

### ii) Oil-coated surfaces: residue of oil for evaluation

The surfaces of the sample S7 (comparative example) and of the sample S8 illustrated in Fig. 11B after cooling were compared with each other to determine whether the oil B for evaluation (beef tallow) or how much of the oil B was left on these surfaces after being wiped for removal of the beef tallow. Clearly, the surface of the oxide layer of the sample S8 was left with less residue of the beef tallow than the surface of the HCr-plated layer of the sample S7. This demonstrates that the oxide layer surpasses the HCr-plated layer in terms of the anti-fouling effect against the solidified beef tallow (animal oil) at room temperature.

c) Oil C for evaluation (vegetable oil: canola oil)
i) Surface layers: oil repellency

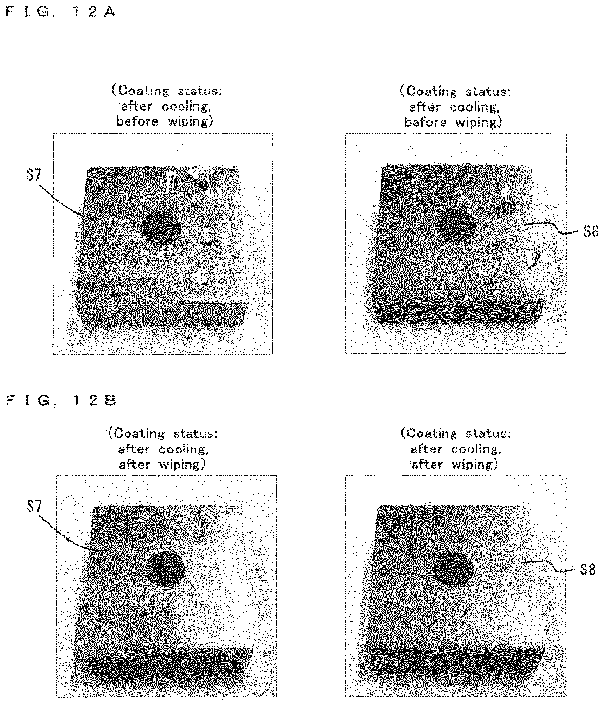

The surfaces of the sample S7 (comparative example) and of the sample S8 illustrated in Fig. 12A after cooling were compared in terms of any residual the oil C for evaluation (canola oil). The canola oil is in liquid state at room temperature. The canola oil is a vegetable oil collected from rapeseed.

It is known from Fig. 12A that the oxide layer of the sample S8 has higher repellency against the canola oil than the HCr-plated layer of the sample S7, strongly suggesting that the canola oil is less likely to adhere to the oxide layer than the HCr-plated layer at room temperature. This demonstrates that the oxide layer surpasses the HCr-plated layer in terms of the anti-fouling effect against the canola oil (vegetable oil) at room temperature.

### ii) Oil-coated surfaces: residue of oil for evaluation

The surfaces of the sample S7 (comparative example) and of the sample S8 illustrated in Fig. 12B after cooling were compared with each other to determine whether the oil C for evaluation (canola oil) or how much of the oil C was left on these surfaces after being wiped for removal of the canola oil. Clearly, the surface of the oxide layer of the sample S8 was left with less residue of the canola oil than the surface of the HCr-plated layer of the sample S7. This demonstrates that the oxide layer surpasses the HCr-plated layer in terms of the anti-fouling effect against the canola oil (vegetable oil) at room temperature.

d) Oil D for evaluation (mineral oil: industrial lubricating oil
i) Surface layers: oil repellency

The pour point of an industrial lubricating oil (SHELL TONNA (registered trademark) is lower than room temperature. Thus, this industrial lubricating oil is in liquid state at room temperature.

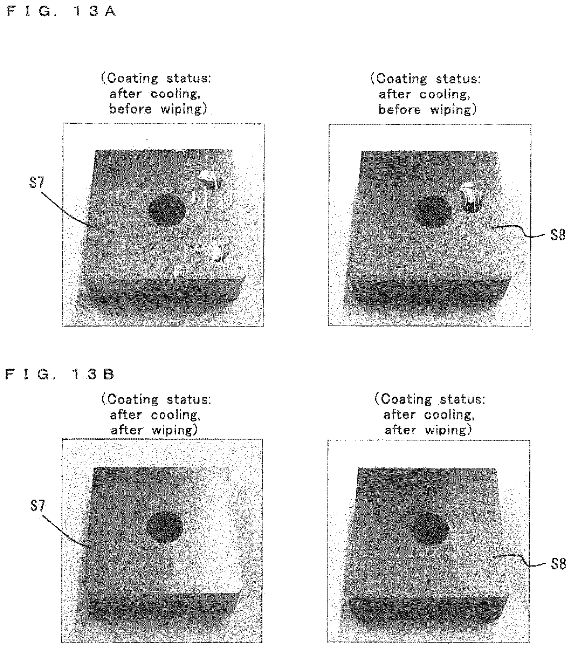

Fig. 13A shows that the oxide layer of the sample S8 has higher repellency against the oil D for evaluation industrial lubricating oil than the HCr-plated layer of the sample S7, strongly suggesting that industrial lubricating oil is less likely to adhere to the oxide layer than the HCr-plated layer at room temperature. This demonstrates that the oxide layer surpasses the HCr-plated layer in terms of the anti-fouling effect against the industrial lubricating oil (mineral oil) at room temperature.

### ii) Oil-coated surfaces: residue of oil for evaluation

The surfaces of the sample S7 (comparative example) and the sample S8 illustrated in Fig. 11B after cooling were compared with each other to determine whether the oil D for evaluation (lubricating oil for industrial use) or how much of the oil D was left on these surfaces after being wiped for removal of the industrial lubricating oil. Clearly, the surface of the oxide layer of the sample S8 was left with less residue of the industrial lubricating oil than the surface of the HCr-plated layer of the sample S7. This demonstrates that the oxide layer surpasses the HCr-plated layer in terms of the anti-fouling effect against the industrial lubricating oil (mineral oil) at room temperature.

What has been described so far is summarized below. The working example 1 provides a translucent material having a base 1 made of a glass-based material and an oxide layer 2 layered on a surface of the base 1. The oxide layer 2 is made of a material primarily consisting of Y₂O₃. Firstly, the translucent material according to the working example 1, therefore, has low adherability and an excellent anti-fouling capacity and is qualified to constitute a low-adhesion material and an anti-fouling material. Additionally, the translucent material according to the working example 1 may be reduced in weight as compared with a material having an oxide layer formed on a metallic medium.

Secondary, the translucent material according to the working example has light transmittance substantially equal to that of glass-based materials and also excels in the following properties.
1) Adhesive strength between the base 1 made of a glass-based material and the oxide layer 2
2) Surface hardness
3) Bending strength
4) Wear resistance
5) Anti-fouling capacity against thermosetting resin, animal oil, vegetable oil, and mineral oil

The translucent material according to the working example 1 that excels in the mentioned properties may be used in applications listed below which are required to satisfy desired levels of mechanical strength, smoothness, flatness, abrasion resistance, heat resistance, plasma resistance, ultraviolet filtering (ultraviolet absorbency), transparency, insulating capacity, and anti-fouling capacity against animal oil, vegetable oil, and mineral oil.
1) Screen window for household appliances (for example, microwave oven, gas range, oven);
2) Cover glass for fingerprint recognition sensors and information terminal devices (for example, mobile telephone, tablet terminal, wearable terminal, liquid crystal monitor);
3) Chemical-proof lining, sight glass, and viewing window for use in chemical plants;
4) Protection panel for lighting apparatuses and floodlighting apparatuses (spotlight, large-sized lighting apparatus, liquid crystal projector);
5) Slide glass, titration plate, and DNA migration plate for microscopes used in medical and biotechnological fields;
6) Glass wafer and glass substrate for manufacture of semiconductors and electronic components; and
7) Other applications (for example, cover glass for solar cell, bulletproof glass, and architectural glass)

### [WORKING EXAMPLE 2]

### - Low-adhesion material and anti-fouling material

A low-adhesion material and an anti-fouling material according to a working example 2 of this invention are hereinafter described. The low-adhesion material and the anti-fouling material according to the working example 2 each include a base made of an inorganic material other than glass-based materials. In the low-adhesion material and the anti-fouling material according to the working example 2, its base is made of an inorganic material other than glass-based materials, unlike the base 1 made of a glass-based material in the translucent material illustrated in Figs. 1A and 1B.

Examples of the material of the base may include ceramic materials and semiconductor materials. Examples of the ceramic materials may include aluminum oxide (Al₂O₃), silicon dioxide (SiO₂), zirconium oxide (ZrO₂), tungsten carbide (WC), and silicon nitride (Si₃N₄). Examples of the semiconductor materials may include silicon (Si), silicon carbide (SiC), and gallium nitride (GaN).

A low-adhesion material and an anti-fouling material according to a modified example derived from the working example 2 of this invention are hereinafter described. The low-adhesion material and the anti-fouling material according to this modified example each include a base made of a metallic material (metallic substance) instead of inorganic materials. In the low-adhesion material and the anti-fouling material according to this modified example, its base is made of a metallic material, unlike the base 1 made of a glass-based material in the translucent material illustrated in Figs. 1A and 1B. Examples of the metallic material of the base may include, tool steel such as high-speed steel, steels such as stainless steel, and super hard alloys. Examples of the stainless steel may include high-silicon stainless steels containing a relatively large content of silicon (Si) (approximately 3% to 5%). A suitable example for weight reduction may be aluminum.

The low-adhesion material and the translucent material according to this invention may be collectively referred to as "low-adhesion material and so forth". The low-adhesion material and so forth can be used as the material of a molding member used in the process of producing a molded article. As used herein, the "molding member" refers to a member that makes contact with a material(s) used in the process of producing a molded article (including a raw material(s) of a molded article and an auxiliary material(s) used to produce the molded article). The molding member includes a molding die used for resin molding. The molding die is used in different molding techniques; injection molding, transfer molding, and compression molding. In case the low-adhesion material excels in translucency (for example, transparency), such a low-adhesion material may be used as the material of a molding die using photo-curable resin. The molding member may include mandrel (cored bar) used in the production of carbon fiber reinforced plastics.

The low-adhesion material and the anti-fouling material according to this invention may be applicable to jigs and tools used to, for example, produce resin used to obtain a molded article and/or to produce a molded article. The low-adhesion material and so forth according to this invention may be applicable to components, jigs, and tools used in kneading and tablet molding. The low-adhesion material and so forth according to this invention may be applicable to components, jigs, and tools used to draw or reshape heated intermediate products, such as prepreg, in the production of such intermediate products. These components, jigs, and tools are also included in the scope of the molding member.

The molding member according to this invention includes molding members required to exert an anti-fouling effect against thermosetting resin, animal oil, vegetable oil, and mineral oil. Examples of such molding members may include molding dies used in the production of food including confectionary, health food, medicament, and sanitary goods. Examples of the food may include solid blocks of instant food such as curry roux, hashed beef roux, and stew roux. Examples of the confectionary may include mint- or fruit-flavored candies in tablet form. Examples of the sanitary goods may include solid blocks of bath products, aromatic products, and deodorant products.

While the vegetable oil and the animal oil and used in the tests described herein were respectively canola oil, and beef tallow and human-derived fat and oil transferred by fingerprints, the scope of this invention is not necessarily limited to these oils. The low-adhesion material and so forth of this application may be expected to achieve low adherability for and exert an anti-fouling effect against other animal oils, for example, lard, chicken fat, and fish oil. The low-adhesion material and so forth of this application may also be expected to achieve low adherability for and exert an anti-fouling effect against other vegetable oils such as soybean oil and corn oil.

The embodiments of this invention were thus far described. These embodiments are described herein by way of example in all aspects and should not be construed as limiting the scope of this invention. The scope of this invention is solely defined by the appended claims and is intended to include all of possible modifications within the scope of the appended claims and in the context of equivalence.

### [REFERENCE SIGNS LIST]

- 1: base
- 2: oxide layer
- 3: intermediate layer
- 4: wiping paper
- 5: sample
- 6: surface to be evaluated
- 7: coating region
- 8: coating tool
- 9: hot plate

## Claims

1. A translucent material, comprising:
a base including a glass-based material; and
an oxide layer layered on a surface of the base,
the oxide layer including yttrium oxide as a base material thereof and further including nitrogen and a Group 4A element; and
wherein the oxide layer has low adherability for at least one of animal oil, vegetable oil, and mineral oil.

2. The translucent material according to claim 1, wherein the glass-based material comprises heat-resistant glass.

3. The translucent material according to claim 1, wherein the glass-based material comprises tempered glass.

4. The translucent material according to claim 1, wherein the oxide layer is directly adhered to the base.

5. The translucent material according to claim 1, wherein the glass-based material comprises quartz glass.

6. The translucent material according to claim 5, further comprising an intermediate layer interposed between the oxide layer and the base.

7. A low-adhesion material having low adherability for a material used, the low-adhesion material comprising:
a base including an inorganic material; and
an oxide layer layered on a surface of the base,
the oxide layer including yttrium oxide as a base material thereof and further including nitrogen and a Group 4A element,
wherein the oxide layer makes contact with the material used; and
wherein the material used comprises at least one of animal oil, vegetable oil, and mineral oil.

8. The low-adhesion material according to claim 7, wherein the oxide layer is directly adhered to the base.

9. The low-adhesion material according to claim 7, further comprising an intermediate layer interposed between the oxide layer and the base.

10. A molding member that makes contact with a material used in the process of producing a molded article, the molding member comprising:
a base including an inorganic material; and
an oxide layer layered on a surface of the base,
the oxide layer including yttrium oxide as a base material thereof and further including nitrogen and a Group 4A element; and
wherein the material used comprises at least one of animal oil, vegetable oil, and mineral oil.

11. The molding member according to claim 10, wherein the oxide layer is directly adhered to the base.

12. The molding member according to claim 10, further comprising an intermediate layer interposed between the oxide layer and the base.

## Patentansprüche

1. Transluzentes Material, umfassend:
eine Basis, umfassend ein Material auf Glasbasis; und
eine Oxidschicht, die auf eine Oberfläche der Basis geschichtet ist,
welche Oxidschicht Yttriumoxid als Basismaterial derselben umfasst und ferner Stickstoff und ein Element der Gruppe 4A umfasst;
wobei die Oxidschicht eine niedrige Haftfähigkeit für zumindest eines aus tierischem Öl, Pflanzenöl und Mineralöl aufweist.

2. Transluzentes Material gemäß Anspruch 1, bei welchem das Material auf Glasbasis ein hitzebeständiges Glass umfasst.

3. Transluzentes Material gemäß Anspruch 1, bei welchem das Material auf Glasbasis vorgespanntes Glas umfasst.

4. Transluzentes Material gemäß Anspruch 1, bei welchem die Oxidschicht unmittelbar an der Basis haftet.

5. Transluzentes Material gemäß Anspruch 1, bei welchem das Material auf Glasbasis Quarzglas umfasst.

6. Transluzentes Material gemäß Anspruch 5, ferner umfassend eine Zwischenschicht zwischen der Oxidschicht und der Basis.

7. Material mit niedriger Haftfähigkeit, welches eine niedrige Haftfähigkeit für ein verwendetes Material aufweist, welches Material niedriger Haftfähigkeit umfasst:
eine Basis, umfassend ein anorganisches Material; und
eine Oxidschicht, die auf eine Oberfläche der Basis geschichtet ist,
welche Oxidschicht Yttriumoxid als ein Basismaterial umfasst und ferner Stickstoff und ein Element der Gruppe 4A umfasst,
wobei die Oxidschicht Kontakt mit dem verwendeten Material hat; und
das verwendete Material zumindest eines aus tierischem Öl, Pflanzenöl und Mineralöl umfasst.

8. Material mit niedriger Haftfähigkeit gemäß Anspruch 7, bei welchem die Oxidschicht unmittelbar an der Basis haftet.

9. Material mit niedriger Haftfähigkeit gemäß Anspruch 7, ferner umfassend eine Zwischenschicht zwischen der Oxidschicht und der Basis.

10. Formelement, welches Kontakt mit einem verwendeten Material in dem Prozess der Herstellung eines geformten Artikels herstellt, welches Formelement umfasst:
eine Basis, umfassend ein anorganisches Material; und
eine Oxidschicht, die auf eine Oberfläche der Basis geschichtet ist,
welche Oxidschicht Yttriumoxid als ein Basismaterial umfasst und ferner Stickstoff und ein Element der Gruppe 4A umfasst, und
das verwendete Material zumindest eines aus tierischem Öl, Pflanzenöl und Mineralöl umfasst.

11. Formelement gemäß Anspruch 10, bei welchem die Oxidschicht unmittelbar an der Basis haftet.

12. Formelement gemäß Anspruch 10, ferner umfassend eine Zwischenschicht zwischen der Oxidschicht und der Basis.

## Revendications

1. Matériau translucide, comprenant :
une base incluant un matériau à base de verre ; et
une couche d'oxyde déposée sur une surface de la base,
la couche d'oxyde incluant de l'oxyde d'yttrium en tant que matériau de base de celle-ci et incluant en outre de l'azote et un élément du groupe 4A ; et
dans lequel la couche d'oxyde a une faible adhérence pour au moins l'une parmi une huile animale, une huile végétale et une huile minérale.

2. Matériau translucide selon la revendication 1, dans lequel le matériau à base de verre comprend du verre résistant à la chaleur.

3. Matériau translucide selon la revendication 1, dans lequel le matériau à base de verre comprend du verre trempé.

4. Matériau translucide selon la revendication 1, dans lequel la couche d'oxyde adhère directement à la base.

5. Matériau translucide selon la revendication 1, dans lequel le matériau à base de verre comprend du verre de quartz.

6. Matériau translucide selon la revendication 5, comprenant en outre une couche intermédiaire intercalée entre la couche d'oxyde et la base.

7. Matériau à faible adhérence ayant une faible adhérence pour un matériau utilisé, le matériau à faible adhérence comprenant :
une base incluant un matériau inorganique ; et
une couche d'oxyde déposée sur une surface de la base,
la couche d'oxyde incluant de l'oxyde d'yttrium en tant que matériau de base de celle-ci et incluant en outre de l'azote et un élément du groupe 4A,
dans lequel la couche d'oxyde entre en contact avec le matériau utilisé ; et
dans lequel le matériau utilisé comprend au moins l'une parmi une huile animale, une huile végétale et une huile minérale.

8. Matériau à faible adhérence selon la revendication 7, dans lequel la couche d'oxyde adhère directement à la base.

9. Matériau à faible adhérence selon la revendication 7, comprenant en outre une couche intermédiaire intercalée entre la couche d'oxyde et la base.

10. Élément de moulage qui entre en contact avec un matériau utilisé dans le procédé de production d'un article moulé, l'élément de moulage comprenant :
une base incluant un matériau inorganique ; et
une couche d'oxyde déposée sur une surface de la base,
la couche d'oxyde incluant de l'oxyde d'yttrium en tant que matériau de base de celle-ci et incluant en outre de l'azote et un élément du groupe 4A ; et
dans lequel le matériau utilisé comprend au moins l'une parmi une huile animale, une huile végétale et une huile minérale.

11. Élément de moulage selon la revendication 10, dans lequel la couche d'oxyde adhère directement à la base.

12. Élément de moulage selon la revendication 10, comprenant en outre une couche intermédiaire intercalée entre la couche d'oxyde et la base.
